## Europäisches Patentamt

## European Patent Office

## Office européen des brevets

(19)

(11) Veröffentlichungsnummer: **0 228 518 B1**

(12) # EUROPÄISCHE PATENTSCHRIFT

(45) Veröffentlichungstag der Patentschrift: **14.08.91**

(51) Int. Cl.⁵: **D06F 37/20, F16F 7/08**

(21) Anmeldenummer: **86114331.1**

(22) Anmeldetag: **16.10.86**

(54) **Reibungs-Dämpfer, insbesondere für Waschmaschinen.**

(30) Priorität: **16.12.85 DE 8535320 U**
**07.02.86 DE 8603274 U**

(43) Veröffentlichungstag der Anmeldung:
**15.07.87 Patentblatt 87/29**

(45) Bekanntmachung des Hinweises auf die
Patenterteilung:
**14.08.91 Patentblatt 91/33**

(84) Benannte Vertragsstaaten:
**AT BE CH DE FR GB IT LI NL SE**

(56) Entgegenhaltungen:
**EP-A- 0 154 857          FR-A- 1 570 563**
**FR-A- 2 275 582          FR-A- 2 374 457**
**FR-A- 2 422 756          GB-A- 2 061 427**

(73) Patentinhaber: **SUSPA COMPART Aktiengesellschaft
Industriestrasse 12-14
W-8503 Altdorf(DE)**

(72) Erfinder: **Bauer, Hans-Peter
Ziegelhütte 9
W-8503 Altdorf(DE)**
Erfinder: **Bauer, Hans Jürgen
Am Eichenhain 8
W-8503 Altdorf(DE)**
Erfinder: **Stadelmann, Ludwig
Schopperstrasse 14
W-8503 Altdorf(DE)**

(74) Vertreter: **Rau, Manfred, Dr. Dipl.-Ing. et al
Rau & Schneck, Patentanwälte Königstrasse
2
W-8500 Nürnberg 1(DE)**

**Beschreibung**

Die Erfindung betrifft einen Reibungs-Dämpfer nach dem Oberbegriff des Anspruches 1.

Bei einem derartigen, aus der EP-A 0 154 857 bekannten Reibungsdämpfer ist ein Bremsbelag auf Asbestbasis vorgesehen. Alle derartigen Reibungsbeläge auf Asbestbasis oder einer vergleichbaren Basis neigen dazu, bei der Dämpfung, insbesondere beim Einsatz in Waschmaschinen, zu rattern. Außerdem ist in vielen Fällen die Geräuschentwicklung beträchtlich. Bei der trockenen Reibung der Asbest-Bremsbeläge tritt ein erheblicher Abrieb und damit Staubanfall auf. Die Lebensdauer ist wegen des hohen Abriebs begrenzt.

Aus der GB-A-2 061 427 ist ein rohrförmiger Stoßdämpfer für Waschmaschinen bekannt, dessen Stößel mit einem Reibungskolben konstanten Durchmessers versehen ist. Gleichermaßen ist der Innendurchmesser der rohrförmigen Reibfläche konstant. Auf dem Reibungskolben sind Bremsbeläge in Form von Hülsen aus geschäumtem Polyurethan angeordnet, die von innen her vorgespannt sind und deshalb mit konstanter Reibkraft an der Innenwand des Rohres anliegen. Die Bremsbeläge sind mit Fett getränkt.

Aus der FR-A-1 570 563 ist ein rohrförmiger Stoßdämpfer für Waschmaschinen bekannt, dessen Reibungskolben mit Bremsklötzen aus gegossenen Super-Polyamiden besteht, deren Oberfläche mit Ausnehmungen oder Zellen zur Aufnahme von Fett versehen sind. Die in sich starren Reibungsklötze unterliegen einem gewissen Verschleiß. Anschließend sind die Dämpfer unbrauchbar.

Aus der FR-A-2 275 582 ist ein Reibungs-Dämpfer mit einer Reibungsplatte bekannt, an der Reibungsköpfe mit Bremsbelägen anliegen, die aus Filz bestehen können. Die Reibplatte weist einen Glasüberzug auf, um den bei einer trockenen Reibung auftretenden Verschleiß zu verringern.

Der Erfindung liegt die Aufgabe zugrunde, einen Reibungs-Dämpfer der gattungsgemäßen Art so auszugestalten, daß eine weiche, geräuscharme Dämpfung bei langer Lebensdauer und gleichbleibenden Dämpfungseigenschaften erreicht wird.

Diese Aufgabe wird erfindungsgemäß durch die Merkmale im Kennzeichnungsteil des Anspruches 1 gelöst. Durch die erfindungsgemäßen Maßnahmen wird eine sogenannte geschmierte Reibung erreicht, d.h. der Unterschied zwischen Gleitreibung und Haftreibung ist reduziert mit der Folge, daß insbesondere an den Umkehrpunkten der Relativbewegungen zwischen Reibungsplatte und Bremsbelägen die kurzzeitig auftretende Haftreibung nicht zu einer starken Erhöhung der Kräfte zwischen Bremsbelägen und Reibungsplatte führt, so daß kein Abreißen mit dem unerwünschten Rattereffekt auftritt. Dadurch, daß der Schaumstoff nachgiebig ist, ist auch dann ein Reibungs- und Dämpfungseffekt gegeben, wenn die Reibungsplatte keine vollständig ebene Oberfläche aufweist, da der Bremsbelag aufgrund seiner Nachgiebigkeit nicht beim Gleiten über eine Unebenheit von der Reibplatte abhebt. Es findet praktisch kein Abrieb statt, so daß kein Staubanfall auftritt. Soweit in geringem Umfang Abrieb auftritt, wird dieser im Fett gebunden. Der in sich nachgiebige Werkstoff der Bremsbeläge wirkt auch quer zur Reibungsbewegung dämpfend.

Insbesondere in der Kombination mit Anspruch 2 treten die geschilderten vorteilhaften Wirkungen auf. Der Filz kann nach Anspruch 3 ausgebildet sein.

Die Ansprüche 4 bis 6 geben alternative Ausgestaltungen der Reibungsköpfe an.

Weitere Vorteile und Merkmale der Erfindung ergeben sich aus der nachfolgenden Beschreibung zweier Ausführungsbeispiele anhand der Zeichnung. Es zeigt

Fig. 1     eine Stirnansicht einer Trommelwaschmaschine in schematischer Darstellung,

Fig. 2     einen Reibungs-Dämpfer nach der Erfindung in einer Seitenansicht,

Fig. 3     eine Draufsicht auf einen Reibungskopf gemäß dem Sichtpfeil III in Fig. 2 und

Fig. 4     eine Teildraufsicht auf einen Reibungskopf mit anderem Bremsbelag gemäß dem Sichtpfeil III in Fig. 2.

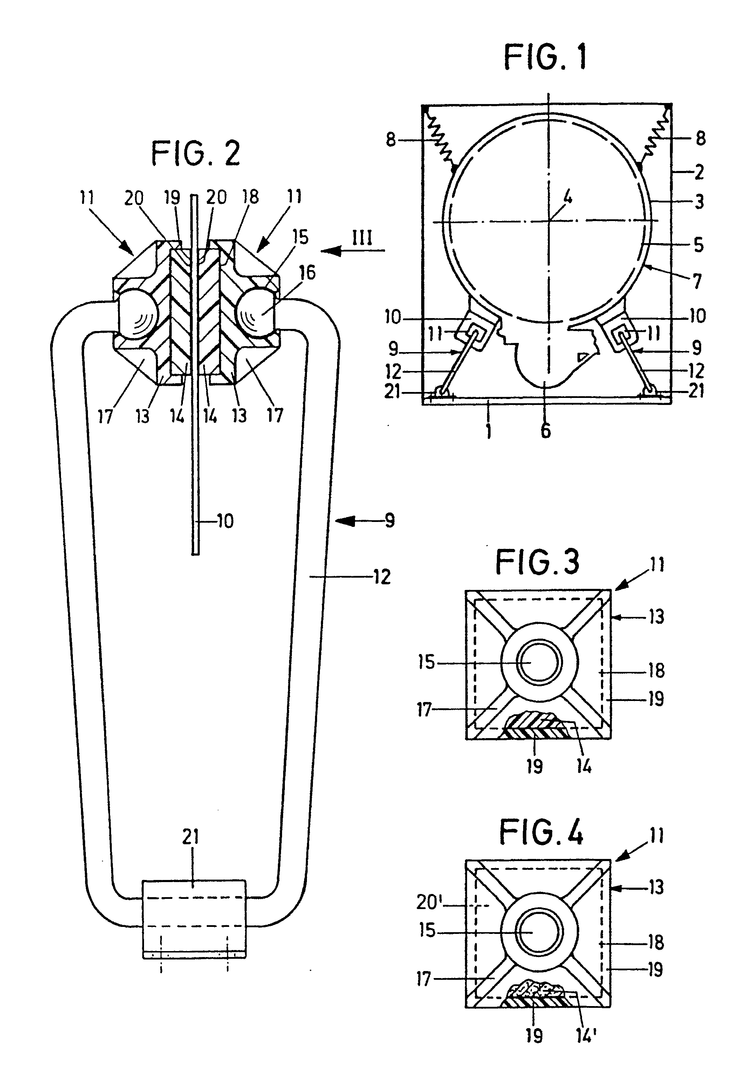

Die in Fig. 1 dargestellte Trommelwaschmaschine weist in üblicher Weise eine Bodenplatte 1 und ein Gehäuse 2 auf. Im Gehäuse ist ein im wesentlichen aus einem Laugenbehälter 3, aus einer in diesem um eine horizontale Achse 4 drehantreibbar gelagerten Trommel 5 und aus einem am Laugenbehälter 3 angebrachten, zum Antrieb der Trommel 5 dienenden Motor 6 bestehendes Waschaggregat 7 angeordnet. Das Waschaggregat ist frei schwingend mittels Schrauben-Zugfedern 8 am Gehäuse 2 aufgehängt. Etwa im Bereich seiner vertikalen, parallel zur Zeichnungsebene verlaufenden Schwerpunktebene sind einerseits an der Bodenplatte 1 und andererseits am Laugenbehälter 3 angebrachte Reibungs-Dämpfer 9 vorgesehen.

Jeder Reibungs-Dämpfer 9 weist eine Reibungsplatte 10 auf, die an der Außenseite des Laugenbehälters 3 angebracht ist, und zwar auf einer Linie, die von der Achse 4 der Trommel 5 unter einem Winkel von 30 bis 40° gegenüber der Vertikalen geneigt nach unten verläuft. Die Reibungsplatte 10 besteht aus Stahlblech von 1 bis 3 mm Dicke. Die ebene Reibungs-Platte 10 ist in der vertikalen, senkrecht zur Achse 4, also parallel zur Zeichnungsebene, verlaufenden Schwerpunktsebene des Waschaggregates 7 angeordnet. Dies gilt für die Reibungsplatten 10 beider Reibungs-Dämpfer 9.

Die Reibungs-Dämpfer 9 weisen weiterhin Reibungsköpfe 11 und einen Spann- und Halte-Bügel 12 für die Reibungsköpfe 11 auf. Jeder Dämpfer 9 weist ein Paar spiegelsymmetrisch zueinander angeordneter und beidseitig gegen die Reibungsplatte anliegender Reibungsköpfe 11 auf, die jede aus einer Aufnahme 13 und einem Bremsbelag 14 bestehen. Die Aufnahmen 13 weisen jeweils auf ihrer Außenseite eine kugelkalottenförmige Ausnehmung 15 auf, in die ein entsprechender Kugelkopf 16 an jedem zugeordneten freien Ende des Bügels 12 elastisch eingerastet werden kann. Da die Aufnahme 13 jeweils aus hartelastischem gespritztem Kunststoff besteht, ist ein solches elastisches Einrasten ohne weiteres möglich. Die Aufnahme 13 ist auf ihrer Außenseite durch Rippen 17 ausgesteift.

Auf der der Reibungsplatte 10 zugewandten Seite ist die Aufnahme 13 jeweils mit einer quaderförmigen Vertiefung 18 versehen, die nur von einem schmalen Rand 19 umgeben ist. In dieser Vertiefung 18 ist der ebenfalls quaderförmig ausgebildete Bremsbelag 14 angeordnet und befestigt, dessen äußere ebene Reibfläche 20 über den Rand 19 vorsteht.

Die Reibungsköpfe 11 werden von dem als hartelastischer Stahlbügel ausgebildeten Spann- und Halte-Bügel 12 mit verhältnismäßig großer Anpreßkraft beidseitig symmetrisch gegen die jeweilige Reibungsplatte 10 gedrückt, so daß diese im wesentlichen frei von Normalkräften ist. Der Bügel 12 ist an seinem unteren Ende mittels einer Lagerschelle 21 an der Bodenplatte 1 befestigt.

Der Bremsbelag 14 besteht aus einem zelligen Werkstoff, beispielsweise einem geschäumten Polyurethan-Schaumstoff, bei dem die Reibfläche 20 durch Schleifen od.dgl. geöffnete Zellen aufweist. Diese geöffneten Zellen oder Poren dienen als Träger für ein Schmiermittel, beispielsweise Fett oder ein verhältnismäßig viskoses Öl.

Der Bremsbelag 14 ist entweder in die Ausnehmung 15 der Aufnahme 13 eingeklebt oder bereits beim Spritzen der Aufnahme 13 mit eingelegt, also beim Spritzvorgang mit dieser verbunden worden.

Beim Betrieb der Waschmaschine, und zwar insbesondere beim Durchlaufen der kritischen Drehzahl, wenn die Trommel 5 von einer niedrigen Waschdrehzahl auf eine hohe Schleuderdrehzahl beschleunigt wird, führt das Waschaggregat 7 durch Unwuchten bedingte Schwingungen im wesentlichen um die Achse 4 aus. Diese Schwingungen werden durch die Dämpfer 9 gedämpft, da ein wesentlicher Teil der Schwingungsenergie aufgrund der Relativbewegung zwischen den Bremsbelägen 14 und den Reibungsplatten 10 in Wärme umgewandelt wird. Die Dämpfung erfolgt aufgrund der sogenannten geschmierten Reibung sehr weich.

Insbesondere an den Umkehrpunkten der jeweiligen Relativbewegungen zwischen Bremsbelägen 14 und Reibungsplatte 10, wo für eine sehr kurze Zeit die Relativbewegung gleich Null ist, wo also ein Wechsel von der Gleitreibung zur Haftreibung erfolgt, tritt kein Rattern auf, da die Unterschiede zwischen Haftreibung und Gleitreibung sehr gering sind. Das Waschaggregat 7 führt also weichgedämpfte Schwingungen aus.

Sogenannte Nickschwingungen des Waschaggregates 7 in Richtung der Achse 4 können sich nicht ausbilden, da insoweit das Waschaggregat 7 durch die zwischen den Reibungsköpfen 11 angeordneten Reibungsplatten 10 in der oben geschilderten Schwerpunktebene des Waschaggregates 7 geführt ist. Da der Bremsbelag 14 aus zelligem, also nicht völlig starrem Material besteht, ist dieses in sich in gewissem Umfang nachgiebig. Wenn also die Reibungsplatte keine vollständig ebene Oberfläche aufweist, dann ist trotzdem der Reibungs- und Dämpfungseffekt gegeben, da der Bremsbelag 14 nicht beim Gleiten über eine Unebenheit abhebt.

Wie in Fig. 4 angedeutet ist, kann der Bremsbelag 14' auch aus einem Filz aus Naturfasern oder Kunstfasern bestehen. Er behält dann trotzdem seine zellige Struktur, d.h. er hat in seiner Reibfläche 20' offene Zellen, in denen sich Schmierstoff befindet. Dies gilt selbstverständlich auch dann, wenn der Filz durchgehend mit Fett getränkt ist. Auch die übrigen vorstehend angegebenen Eigenschaften und Vorteile bleiben erhalten.

## Patentansprüche

1. Reibungs-Dämpfer, insbesondere für Waschmaschinen, mit einer Reibungsplatte (10) mit einem Spann- und Halte-Bügel (12) und mit von diesem gegen die Reibungsplatte (10) gedrückten Reibungsköpfen (11), die jeweils eine Aufnahme (13) und einen von dieser gehaltenen Bremsbelag (14, 14') aufweisen, der mit einer Reibfläche (20, 20') gegen die Reibungsplatte (10) anliegt, dadurch gekennzeichnet, daß der Bremsbelag (14, 14') aus einem zelligen Material, nämlich einem nachgiebigen geschäumten Polyurethan-Schaumstoff oder Filz, mit in der Reibfläche (20, 20') offenen Zellen besteht, und daß zumindest in den offenen Zellen der Reibfläche (20, 20') Schmierstoff angeordnet ist.

2. Reibungs-Dämpfer nach Anspruch 1, dadurch gekennzeichnet, daß die Reibungsplatte (10) aus Stahlblech besteht.

3. Reibungs-Dämpfer nach Anspruch 1, dadurch gekennzeichnet, daß der Bremsbelag (14') aus Filz aus Naturfasern oder Kunstfasern besteht.

4. Reibungs-Dämpfer nach Anspruch 1, dadurch gekennzeichnet, daß der Bremsbelag (14) aus Polyurethan-Schaumstoff eine Reibfläche (20) mit durch Schleifen o.dgl. geöffneten Zellen aufweist.

5. Reibungs-Dämpfer nach Anspruch 1, dadurch gekennzeichnet, daß der Bremsbelag (14, 14') an der Aufnahme (13) angeklebt ist.

6. Reibungs-Dämpfer nach Anspruch 1, dadurch gekennzeichnet, daß die Aufnahme (13) aus einem gespritzten Kunststoff besteht, und daß der Bremsbelag (14) durch direkte Kunststoffbindung mit der Aufnahme (13) verbunden ist.

## Claims

1. A friction damper, particularly for washing machines, with a friction plate (10) with a clamping and retaining bracket (12) and with, pressed by this against the friction plate (10), friction heads (11) each of which has a housing (13) and, held thereby, a brake lining (14, 14') having a friction surface (20, 20') which bears against the friction plate (10), characterised in that the brake lining (14, 14') consists of a cellular material, namely a resilient foamed polyurethane foam material or felt with open cells in the friction surface (20, 20') and in that there is a lubricant present at least in the open cells of the friction surface (20, 20').

2. A friction damper according to claim 1, characterised in that the friction plate (10) consists of sheet steel.

3. A friction damper according to claim 1, characterised in that the brake lining (14') consists of felt of natural fibres or synthetic fibres.

4. A friction damper according to claim 1, characterised in that the brake lining (14) of polyurethane foam has a friction surface (20) with cells opened by grinding or the like.

5. A friction damper according to claim 1, characterised in that the brake lining (14, 14') is glued onto the housing (13).

6. A friction damper according to claim 1, characterised in that the housing (13) consists of an injection moulded synthetic plastics material and in that the brake lining (14) is connected to the housing (13) by direct synthetic plastics bonding.

## Revendications

1. Amortisseur à friction, notamment destiné à des machines à laver, comportant une plaque de friction (10), un étrier de serrage et de maintien (12) et des têtes de friction (11) poussées par celui-ci contre la plaque de friction (10) et présentant chacune un élément de support (13) qui maintient une garniture de frein (14, 14') qui s'applique contre la plaque de friction (10) par une surface de friction (20, 20'), caractérisé en ce que la garniture de frein (14, 14') est constituée par un matériau alvéolaire, à savoir une mousse de polyuréthanne moussé, flexible, ou un feutre, avec des alvéoles ouvertes dans la surface de friction (20, 20'), et en ce que du lubrifiant est logé dans les alvéoles ouvertes de la surface de friction (20, 20').

2. Amortisseur à friction selon la revendication 1, caractérisé en ce que la plaque de friction (10) est réalisée en tôle d'acier.

3. Amortisseur à friction selon la revendication 1, caractérisé en ce que la garniture de frein (14') est constituée par un feutre en fibres naturelles ou artificielles.

4. Amortisseur à friction selon la revendication 1, caractérisé en ce que la garniture de frein (14) constituée par une mousse de polyuréthanne présente une surface de friction (20) comportant des alvéoles ouvertes par meulage ou moyen similaire.

5. Amortisseur à friction selon la revendication 1, caractérisé en ce que la garniture de friction (14, 14') est collée sur l'élément de support (13).

6. Amortisseur à friction selon la revendication 1, caractérisé en ce que l'élément de support (13) est réalisé en matière plastique injectée, et en ce que la garniture de frein (14) est reliée à l'élément de support (13) par prise directe dans la matière plastique.

# FIG. 1

# FIG. 2

# FIG.3

# FIG.4

5